# FASCICULE DE BREVET EUROPEEN

(11) **EP 3 956 272 B1**
(45) Date de publication et mention de la délivrance du brevet: **23.09.2026**
(21) Numéro de dépôt: 20717927.6
(22) Date de dépôt: 17.04.2020
(51) Int. Cl.: C04B 28/04, C04B 28/06, C04B 111/60, C04B 111/72

(54) **MORTIER SEC COMPRENANT DES GRANULATS DE LAITIER ALUMINEUX GRANULÉ**
TROCKENMÖRTEL MIT AGGREGATEN AUS KÖRNIGER SCHLACKE MIT HOHEM ALUMINIUMOXIDGEHALT
DRY MORTAR CONTAINING AGGREGATES OF GRANULAR HIGH-ALUMINA SLAG

(30) Priorité: 17.04.2019 FR 1904192
(43) Date de publication de la demande: 23.02.2022
(73) Titulaire: Saint-Gobain Weber, 94370 Sucy-en-Brie (FR)
(72) Inventeur: LAMBERET, Séverine, 01320 CHALAMONT (FR); BERTRAND, Lionel, 78600 MAISONS-LAFFITTE (FR)
(74) Mandataire: Saint-Gobain Recherche
(86) Numéro de dépôt international: PCT/EP2020/060893
(87) Numéro de publication internationale: WO 2020/212589

(56) Documents cités:
- BE-A- 346 171
- FR-A1- 2 943 665
- RU-C1- 2 325 364
- US-A- 4 231 801

## Description

L'invention se rapporte au domaine des mortiers. Les mortiers sont des mélanges comprenant un liant hydraulique et des granulats, ainsi qu'éventuellement divers additifs. Par « liant hydraulique » on entend le cas échéant, de manière collective, l'ensemble des liants hydrauliques présents dans la composition. On entend par mortier sec un mélange pulvérulent dans lequel le liant hydraulique et les granulats sont sous forme de poudre et de grains. Après mélange avec de l'eau, étape dite de gâchage, on obtient une pâte, ou mortier humide, qui peut être mise en forme, par exemple déposée sur un support, avant de durcir. Le produit final obtenu, ou mortier durci, est donc constitué de granulats liés par un liant minéral obtenu par hydratation du liant hydraulique. Les mortiers sont classiquement employés dans le domaine du bâtiment et des travaux publics pour former des enduits de façade ou des revêtements de sol, comme colle à carrelage, comme mortier de jointoiement, comme mortier de réparation d'ouvrage en béton etc.

Le document FR 2943665 divulgue un mortier sec pour revêtements de surfaces et sols autonivellants comprenant un liant hydraulique ettringitique et de granulats synthétiques inorganiques alumino-calciques.

Un but de l'invention est de proposer un mortier ayant de bonnes propriétés de résistance à l'usure, notamment par abrasion. Un autre but de l'invention est de proposer un mortier ayant de bonnes propriétés de résistance à la corrosion chimique et biogénique. Un autre but de l'invention est enfin de proposer un mortier ayant une empreinte carbone réduite.

Ces différents buts sont atteints par un mortier sec comprenant un liant hydraulique et des granulats, lesdits granulats comprenant des granulats de laitier alumineux granulé dont le composant le plus abondant en poids est l'alumine, la distribution granulométrique pondérale du laitier alumineux granulé étant telle que le D90 est d'au plus 5,0 mm et le D50 est d'au moins 0,2 mm.

Les D90 et D50 sont typiquement déterminés par analyse granulométrique par tamisage.

Dans l'ensemble du présent texte, les compositions chimiques élémentaires sont données en pourcents massiques équivalents d'oxyde. Par exemple, dire qu'une substance contient X% d'alumine signifie que cette substance contient l'élément aluminium en une quantité équivalente à celle apportée par X% d'alumine. Cela ne signifie toutefois pas nécessairement que la substance contient de l'alumine en tant que composé chimique ou constituant minéralogique.

L'invention a aussi pour objet un revêtement de sol ou un mortier de réparation susceptible d'être obtenu, ou obtenu, par gâchage avec de l'eau du mortier sec selon l'invention.

Le revêtement de sol est notamment un couche d'usure, notamment autonivelante ou auto-lissante. Le revêtement de sol est notamment un revêtement de sol industriel. L'invention est particulièrement avantageuse dans une telle application, qui requiert du mortier durci une très forte résistance à l'abrasion et avantageusement de hautes performances mécaniques.

Le mortier de réparation est notamment un mortier de réparation pour réseau d'assainissement. Les réseaux d'assainissement comprennent généralement des égouts maçonnés, parfois appelés « ovoïdes » du fait de leur forme, sur la surface desquels vivent des bactéries *Thiobacillus,* responsables de la génération d'acide sulfurique et qui dégradent la maçonnerie à base de ciment Portland (phénomène de corrosion biogénique). Le mortier selon l'invention, en particulier lorsque le liant comprend du ciment alumineux, présente des propriétés bactériostatiques qui vont inhiber l'activité des bactéries et donc réduire la cinétique de corrosion biogénique.

On entend par laitier un sous-produit d'un procédé industriel mettant en œuvre la fusion d'une matière de départ, fusion destinée à séparer des métaux d'une phase d'oxydes, cette dernière étant appelée « laitier ». Au sens de la présente invention, on entend par « laitier alumineux » un laitier dont le composant le plus abondant en poids est l'alumine. Au sens de la présente invention, le terme granulé signifie que le laitier alumineux fondu a subi une trempe thermique à l'eau ayant pour conséquence l'obtention de grains en général majoritairement amorphes.

Les inventeurs ont pu mettre en évidence que les granulats d'un laitier alumineux tel que défini précédemment présentaient une dureté très élevée. Ces granulats se sont en outre révélés posséder une certaine réactivité, du moins en surface, capable de renforcer l'interface entre les granulats et le liant dans le mortier durci. Il résulte de ces deux propriétés une meilleure résistance à l'abrasion, particulièrement utile par exemple dans le cas de couches d'usure pour sols. Enfin, de par sa composition chimique, le granulat s'est révélé conférer au mortier durci une excellente résistance à la corrosion chimique et biogénique, particulièrement appréciable notamment dans le cas de mortiers de réparation pour réseaux d'assainissement. En outre, ces granulats n'impactent pas négativement les autres propriétés d'usage des mortiers durcis ou les caractéristiques de mise en œuvre ou de durcissement du mortier humide.

Le laitier étant un sous-produit, son utilisation permet en outre de réduire l'empreinte carbone du mortier comparativement à l'emploi de granulats obtenus par concassage de clinkers de ciments.

De préférence la teneur pondérale en alumine du laitier alumineux granulé est comprise entre 30 et 60%, notamment entre 32 et 45%.

La teneur pondérale en silice du laitier alumineux granulé est avantageusement comprise entre 5 et 25%, de préférence entre 10 et 20%, notamment entre 12 et 18%.

La teneur pondérale en chaux du laitier alumineux granulé est avantageusement comprise entre 20 et 40%, notamment entre 25 et 35%, en étant nécessairement inférieure à la teneur en alumine.

La teneur en oxyde de fer dans le laitier alumineux est de préférence inférieure à 5% en poids, notamment inférieure à 3% en poids, et même inférieure à 2% en poids.

Le laitier alumineux granulé est avantageusement majoritairement, voire totalement, amorphe. Le taux de matière amorphe, tel que déterminé par diffraction des rayons X selon la méthode de Rietveld, est de préférence d'au moins 66%, notamment d'au moins 90%, et même d'au moins 95% ou d'au moins 98% en masse.

Le laitier alumineux granulé est de préférence issu du recyclage par fusion totale de catalyseurs utilisés pour la désulfuration des produits pétroliers, notamment de catalyseurs à base de molybdène et/ou de cobalt. Ces catalyseurs sont recyclés et un certain nombre de sous-produits sont obtenus pendant les cycles de recyclage. Un des sous-produits obtenus est un laitier alumineux au sens de l'invention. Le laitier alumineux comprend de préférence du molybdène ou du cobalt, en une teneur pondérale d'au plus 0,5% exprimée en poids d'oxyde.

Le D90 du laitier alumineux granulé est de préférence d'au plus 4,0 mm, notamment d'au plus 3,0 mm et même d'au plus 2,0 mm. Le D90 est de préférence d'au moins 0,5 mm. Le D50 du laitier alumineux granulé est de préférence d'au moins 0,3 mm et/ou d'au plus 2,0 mm.

Dans le cadre d'une application comme revêtement de sol, le D90 est de préférence d'au plus 1,5 mm, notamment d'au plus 1,0 mm. Le D50 est de préférence d'au moins 0,25 mm. Il a été observé que des granulats plus fins permettaient d'obtenir une meilleure résistance à la compression et de mieux contrôler les variations dimensionnelles pendant le durcissement.

Dans le cadre d'une application comme mortier de réparation, en particulier pour réseau d'assainissement, le D90 est de préférence d'au plus 2,0 mm, notamment d'au plus 1,5 mm. Le D50 est de préférence d'au moins 0,3 mm. Des granulats plus fins sont plus favorables à une mise en œuvre par projection.

Le liant hydraulique est de préférence choisi dans le groupe formé par les ciments Portland, les ciments bélitiques, les ciments alumineux, les ciments sulfoalumineux, les ciments de mélanges pouzzolaniques et les mélanges de deux ou plus ces liants hydrauliques.

Les ciments de mélanges pouzzolaniques comprennent du laitier de haut fourneau granulé broyé, des cendres volantes, des fumées de silice, du calcaire, du schiste calciné et/ou des pouzzolanes naturelles ou calcinées. Il peut notamment s'agir de ciments CEM II, CEM III, CEM IV ou CEM V.

Comme indiqué précédemment, par « liant hydraulique » on entend éventuellement un mélange de liants hydrauliques.

Le liant hydraulique comprend avantageusement un ciment alumineux ou un ciment sulfoalumineux. Dans une telle configuration, l'interface entre le liant hydraulique et les granulats de laitier alumineux est encore renforcée, ce qui est bénéfique en termes de résistance à l'abrasion.

Le liant hydraulique peut aussi comprendre, de manière avantageuse, un laitier alumineux granulé tel que décrit précédemment, mais en outre broyé afin de lui conférer des propriétés d'hydraulicité. Le D50 du laitier alumineux, utilisé comme liant hydraulique, est alors de préférence d'au plus 20 µm, notamment d'au plus 15 µm. Le laitier alumineux peut alors se substituer au moins partiellement à un ciment alumineux.

Dans le cadre d'une application comme revêtement de sol, le liant hydraulique est de préférence constitué de ciment Portland, ou est un mélange constitué de ciment Portland, de ciment alumineux et d'une source de sulfate de calcium, telle que le plâtre, l'hémihydrate ou l'anhydrite, éventuellement additionné de laitier de haut-fourneau granulé broyé. Un laitier alumineux granulé broyé peut se substituer au ciment alumineux.

Dans le cadre d'une application comme mortier de réparation pour réseau d'assainissement, le liant hydraulique est de préférence choisi parmi les ciments alumineux, les ciments sulfoalumineux, les laitiers alumineux granulés broyés et les mélanges de ces derniers. Le liant préféré est le ciment alumineux. Les teneurs élevées en alumine de ces liants sont favorables à l'obtention de propriétés bactériostatiques.

La teneur pondérale totale en liant hydraulique dans le mortier sec est de préférence comprise dans un domaine allant de 15 à 45%, notamment de 20 à 40% et même de 25 à 40%.

La teneur pondérale totale en granulats dans le mortier sec est de préférence comprise dans un domaine allant de 20 à 80%, notamment de 30 à 70%, voire de 40 à 70%.

La proportion massique de granulats de laitier alumineux granulé par rapport à la quantité totale de granulats est de préférence d'au moins 20%, notamment d'au moins 30% et même d'au moins 40%, ou encore d'au moins 50% ou d'au moins 60%. Elle peut même être d'au moins 70%, notamment d'au moins 80%, voire d'au moins 90%. Les granulats peuvent même être constitués de granulats de laitier alumineux granulé. Dans le cas contraire, les granulats peuvent aussi contenir d'autres granulats, notamment siliceux et/ou calcaires.

Le mortier sec peut également comprendre un ou plusieurs additifs, choisis parmi les agents rhéologiques, les agents rétenteurs d'eau, les agents épaississants, les agents dispersants, les pigments, les accélérateurs, les retardateurs, les résines polymériques redispersables. La teneur pondérale totale en adjuvants dans le mortier sec est de préférence comprise dans un domaine allant de 0,01% à 10%. Ces additifs permettent notamment de faciliter la mise en œuvre du mortier, en adaptant par exemple la rhéologie et le temps de prise du mortier humide.

Les exemples qui suivent illustrent l'invention de manière non-limitative.

Ces exemples utilisent un laitier alumineux granulé, issu du recyclage par fusion totale de catalyseurs de désulfurisation des produits pétroliers à base de cobalt et de molybdène. Les constituants principaux de ce laitier sont l'alumine (41%), la chaux (32,6%), la silice (12,6%), l'oxyde de magnésium (8,9%), l'oxyde de fer (1,6%) et le soufre (1,6%). D'autres oxydes notamment de molybdène, de nickel, de cobalt, de chrome, de vanadium, de zinc, de manganèse, de phosphore, de potassium, de titane, ainsi que du chlore sont également présents dans le laitier, mais à des teneurs minimes, inférieures à 0,5%.

Ce laitier a été concassé de deux manières différentes, afin d'obtenir les distributions granulométriques suivantes :
Laitier 1 : D50=0,5 mm et D90=0,8 mm.
Laitier 2 : D50=1,2 mm et D90=1,7 mm.

Ces granulats présentent une dureté Vickers d'environ 685 kg/mm² et une ténacité de 2,8 MPa.m^{1/2}.

Des mortiers secs ont été obtenus en mélangeant ces granulats à hauteur de 18% en poids avec 40% en poids d'autres granulats (sable siliceux et fillers calcaire) et 35% en poids d'un liant hydraulique constitué de ciment Portland, de laitier de haut-fourneau granulé broyé, de ciment alumineux et de sulfate de calcium. Les mortiers contenaient également des additifs classiquement utilisés dans le domaine des sols autonivelants : superplastifiant, résine redispersable et rétenteur d'eau (éthers de cellulose). Les teneurs indiquées sont relatives au poids de mortier sec.

Ces mortiers ont été comparés à des mortiers (appelés C1) spécialement adaptés à la réalisation de couches d'usure pour locaux industriels et charges extra lourdes, donc présentant une résistance à l'abrasion améliorée. Ces mortiers se distinguent des mortiers exemplifiés uniquement en ce que les granulats de laitier alumineux sont remplacés par des granulats de klinker de ciment alumineux présentant un D50 de 1,2 mm et un D90 de 2,0 mm. Le taux de gâchage était d'environ 15 à 17%.

Le tableau 1 ci-après récapitule les résultats obtenus, en indiquant pour chaque mortier le temps de début et de fin de prise, mesurées avec l'appareil de Vicat, le retrait à 28 jours, la résistance à la flexion et à la compression après 1, 7 et 28 jours, ainsi que la résistance à l'abrasion (résistance à l'usure Böhme selon la norme EN 13892-3 :2015).

**[Table 1]**

| Exemple | | 1 | 2 | C1 |
|---|---|---|---|---|
| Granulat | | Laitier 1 | Laitier 2 | Clinker |
| Début de prise (min) | | 60 | 65 | 50 |
| Fin de prise (min) | | 75 | 75 | 65 |
| Retrait à 28 jours (‰) | | -0,33 | 0,15 | -0,18 |
| Résistance à la flexion (MPa) | 1j | 3,2 | 2,3 | 2,5 |
| | 7j | 7,3 | 5, 6 | 6, 6 |
| | 28j | 11,1 | 9,4 | 10,2 |
| Résistance à la compression (MPa) | 1j | 11,7 | 8, 9 | 10,7 |
| | 7j | 24, 8 | 20, 4 | 23,1 |
| | 28j | 38, 1 | 33, 7 | 35,7 |
| Abrasion (cm³/50cm² ) | | 23,1 | 22, 8 | 21,7 |

La résistance à l'usure est comparable à celle des couches d'usure existantes. La résistance à la flexion et à la compression est même améliorée en utilisant les granulats de laitier alumineux plus fins.

## Revendications

1. Mortier sec comprenant un liant hydraulique et des granulats, lesdits granulats comprenant des granulats de laitier alumineux granulé dont le composant le plus abondant en poids est l'alumine, la distribution granulométrique pondérale du laitier alumineux granulé étant telle que le D90 est d'au plus 5,0 mm et le D50 est d'au moins 0,2 mm, déterminés par analyse granulométrique par tamisage.

2. Mortier sec selon la revendication 1, tel que la teneur pondérale en alumine du laitier alumineux granulé est comprise entre 30 et 60%, de préférence entre 32 et 45%.

3. Mortier sec selon l'une des revendications précédentes, tel que la teneur pondérale en silice du laitier alumineux granulé est comprise entre 5 et 25%, de préférence entre 10 et 20%.

4. Mortier selon l'une des revendications précédentes, tel que la teneur pondérale en chaux du laitier alumineux granulé est comprise entre 20 et 40%, notamment entre 25 et 35%.

5. Mortier sec selon l'une des revendications précédentes, tel que le laitier alumineux granulé est majoritairement amorphe.

6. Mortier sec selon l'une des revendications précédentes, tel que le laitier alumineux granulé est issu du recyclage par fusion totale de catalyseurs utilisés pour la désulfuration des produits pétroliers, notamment de catalyseurs à base de molybdène et/ou de cobalt.

7. Mortier sec selon l'une des revendications précédentes, tel que le D90 du laitier alumineux granulé est d'au plus 4,0 mm, notamment d'au plus 3,0 mm.

8. Mortier sec selon l'une des revendications précédentes, tel que le D50 du laitier alumineux granulé est d'au moins 0,3 mm et d'au plus 2,0 mm.

9. Mortier sec selon l'une des revendications précédentes, dans lequel le liant hydraulique est choisi dans le groupe formé par les ciments Portland, les ciments bélitiques, les ciments alumineux, les ciments sulfoalumineux, les ciments de mélanges pouzzolaniques et les mélanges de deux ou plus de ces liants hydrauliques.

10. Mortier sec selon l'une des revendications précédentes, tel que la teneur pondérale totale en liant hydraulique est comprise dans un domaine allant de 15 à 45%, notamment de 20 à 40%.

11. Mortier sec selon l'une des revendications précédentes, tel que la teneur pondérale totale en granulats dans le mortier sec est comprise dans un domaine allant de 20 à 80%, notamment de 30 à 70%.

12. Mortier sec selon l'une des revendications précédentes, tel que la proportion massique de granulats de laitier alumineux granulé par rapport à la quantité totale de granulats est de préférence d'au moins 20%, notamment d'au moins 30%.

13. Revêtement de sol, notamment de sol industriel, obtenu par gâchage avec de l'eau du mortier sec selon l'une des revendications précédentes.

14. Revêtement de sol selon la revendication précédente, tel que le liant hydraulique est constitué de ciment Portland ou est un mélange constitué de ciment Portland, de ciment alumineux et d'une source de sulfate de calcium éventuellement additionné de laitier de haut-fourneau granulé broyé.

15. Mortier de réparation, notamment pour réseau d'assainissement, obtenu par gâchage avec de l'eau du mortier sec selon l'une des revendications 1 à 12.

16. Mortier de réparation selon la revendication précédente, tel que le liant hydraulique est choisi parmi les ciments alumineux, les ciments sulfoalumineux, les laitiers alumineux granulés broyés et les mélanges de ces derniers.

## Patentansprüche

1. Trockenmörtel, umfassend ein hydraulisches Bindemittel und Granulate, die Granulate umfassend Granulate aus granulierter Aluminiumoxidschlacke, deren gewichtsmäßig häufigster Bestandteil Aluminiumoxid ist, wobei die gewichtsbezogene Korngrößenverteilung der granulierten Aluminiumoxidschlacke derart ist, dass der D90 höchstens 5,0 mm beträgt und der D50 mindestens 0,2 mm beträgt, bestimmt durch Korngrößenanalyse durch Sieben.

2. Trockenmörtel nach Anspruch 1, wobei der Gewichtsanteil an Aluminiumoxid der granulierten Aluminiumoxidschlacke zwischen 30 und 60 %, vorzugsweise zwischen 32 und 45 %, liegt.

3. Trockenmörtel nach einem der vorstehenden Ansprüche, wobei der Gewichtsanteil an Siliciumdioxid der granulierten Aluminiumoxidschlacke zwischen 5 und 25 Gew.-%, vorzugsweise zwischen 10 und 20 % liegt.

4. Mörtel nach einem der vorstehenden Ansprüche, wobei der Gewichtsanteil an Kalk der granulierten Aluminiumoxidschlacke zwischen 20 und 40 Gew.-%, insbesondere zwischen 25 und 35 Gew.-% liegt.

5. Trockenmörtel nach einem der vorstehenden Ansprüche, wobei die granulierte Aluminiumoxidschlacke hauptsächlich amorph ist.

6. Trockenmörtel nach einem der vorstehenden Ansprüche, wobei die granulierte Aluminiumoxidschlacke aus der Wiederverwertung durch vollständige Fusion von Katalysatoren stammt, die für die Entschwefelung von Erdölprodukten verwendet werden, insbesondere Katalysatoren auf Molybdän- und/oder Kobaltbasis.

7. Trockenmörtel nach einem der vorstehenden Ansprüche, wobei der D90 der Aluminiumoxidschlacke höchstens 4,0 mm, insbesondere höchstens 3,0 mm, beträgt.

8. Trockenmörtel nach einem der vorstehenden Ansprüche, wobei der D50 der granulierten Aluminiumoxidschlacke mindestens 0,3 mm und höchstens 2,0 mm beträgt.

9. Trockenmörtel nach einem der vorstehenden Ansprüche, wobei das hydraulische Bindemittel ausgewählt ist aus der Gruppe bestehend aus Portlandzementen, Belitzementen, Aluminatzementen, Sulfoaluminatzementen, Puzzolanmischzementen und Mischungen von zwei oder mehr dieser hydraulischen Bindemittel.

10. Trockenmörtel nach einem der vorstehenden Ansprüche, wobei der Gesamtgewichtsanteil an hydraulischem Bindemittel in einem Bereich von 15 bis 45 %, insbesondere von 20 bis 40 %, liegt.

11. Trockenmörtel nach einem der vorstehenden Ansprüche, wobei der Gesamtgewichtsanteil an Granulaten in dem Trockenmörtel in einem Bereich von 20 bis 80 %, insbesondere von 30 bis 70 %, liegt.

12. Trockenmörtel nach einem der vorstehenden Ansprüche, wobei der Massenanteil an Granulaten aus granulierter Aluminiumoxidschlacke relativ zu der Gesamtmenge an Granulaten vorzugsweise mindestens 20 %, insbesondere mindestens 30 % beträgt.

13. Bodenbelag, insbesondere Industrieboden, erhalten durch Anrühren des Trockenmörtels nach einem der vorstehenden Ansprüche mit Wasser.

14. Bodenbelag nach dem vorstehenden Anspruch, wobei das hydraulische Bindemittel aus Portlandzement besteht oder eine Mischung ist, bestehend aus Portlandzement, Aluminatzement und einer Calciumsulfatquelle, optional versetzt mit gemahlener granulierter Hochofenschlacke.

15. Reparaturmörtel, insbesondere für ein Abwassernetz, erhalten durch Anrühren des Trockenmörtels nach einem der Ansprüche 1 bis 12 mit Wasser.

16. Reparaturmörtel nach dem vorstehenden Anspruch, wobei das hydraulische Bindemittel ausgewählt ist aus Aluminatzementen, Sulfoaluminatzementen, gemahlenen granulierten Aluminiumoxidschlacken und Mischungen davon.

## Claims

1. Dry mortar comprising a hydraulic binder and aggregates, said aggregates comprising granulated aluminous slag aggregates, in which the most abundant component by weight is alumina, the particle size distribution by weight of the granulated aluminous slag being such that the D90 is at most 5.0 mm and the D50 is at least 0.2 mm, as determined by sieve particle size analysis.

2. Dry mortar according to claim 1, wherein the alumina content by weight of the granulated aluminous slag is between 30 and 60%, preferably between 32 and 45%.

3. Dry mortar according to any one of the preceding claims, wherein the silica content by weight of the granulated aluminous slag is between 5 and 25%, preferably between 10 and 20%.

4. Mortar according to any one of the preceding claims, wherein the lime content by weight of the granulated aluminous slag is between 20 and 40%, in particular between 25 and 35%.

5. Dry mortar according to any one of the preceding claims, wherein the granulated aluminous slag is predominantly amorphous.

6. Dry mortar according to any one of the preceding claims, wherein the granulated aluminous slag is obtained from the recycling by complete melting of catalysts used for the desulfurization of petroleum products, in particular molybdenum- and/or cobalt-based catalysts.

7. Dry mortar according to any one of the preceding claims, wherein the D90 of the granulated aluminous slag is at most 4.0 mm, in particular at most 3.0 mm.

8. Dry mortar according to any one of the preceding claims, wherein the D50 of the granulated aluminous slag is at least 0.3 mm and at most 2.0 mm.

9. Dry mortar according to any one of the preceding claims, wherein the hydraulic binder is selected from the group consisting of Portland cements, belite cements, high-alumina cements, sulfoaluminate cements, cements formed of pozzolanic mixtures, and mixtures of two or more of these hydraulic binders.

10. Dry mortar according to any one of the preceding claims, wherein the total content by weight of the hydraulic binder is within a range from 15 to 45%, in particular from 20 to 40%.

11. Dry mortar according to any one of the preceding claims, wherein the total content by weight of aggregates in the dry mortar is within a range from 20 to 80%, in particular from 30 to 70%.

12. Dry mortar according to any one of the preceding claims, wherein the proportion by weight of granulated aluminous slag aggregates relative to the total amount of aggregates is preferably at least 20%, in particular at least 30%.

13. Floor covering, in particular an industrial floor covering, obtained by mixing the dry mortar according to any one of the preceding claims with water.

14. Floor covering according to the preceding claim, wherein the hydraulic binder consists of Portland cement or is a mixture consisting of Portland cement, calcium aluminate cement, and a source of calcium sulfate, optionally supplemented with ground granulated blast-furnace slag.

15. Repair mortar, in particular for sewer networks, obtained by mixing the dry mortar according to any one of claims 1 to 12 with water.

16. Repair mortar according to the preceding claim, wherein the hydraulic binder is selected from high-alumina cements, sulfoaluminate cements, ground granulated aluminous slag, and mixtures thereof.
